# EUROPEAN PATENT APPLICATION

(11) **EP 1 207 488 A1**
(43) Date of publication of application: **22.05.2002**
(21) Application number: 01904436.1
(22) Date of filing: 14.02.2001
(51) Int. Cl.: G06F 17/60

(54) **METHOD FOR DETERMINING PRICE OF SCRAPPED/ACCIDENT CAR AND SYSTEM FOR DETERMINING PRICE**

(30) Priority: 14.02.2000 JP 2000035828
(71) Applicant: TSUBASA SYSTEM CO. LTD., Tokyo 136-0071 (JP)
(72) Inventor: ONOUE, Masashi, C/O TSUBASA SYSTEM CO., LTD., Tokyo 136-0071 (JP)
(74) Representative: Wess, Wolfgang, Dipl.-Ing.
(86) International application number: JP0101040
(87) International publication number: WO0159639

(57) **Abstract**

A method and system for estimating a price value of a disused/accident car that is developed on a network are disclosed. The method and system are capable of stably collecting the disused/accident car, grasping a stock of used parts, establishing market prices of the parts and effectively utilizing the parts by properly evaluating a price value of the disused/accident car coming out in each locality. A disused/accident vehicle price value estimating method of determining a price of a disused/accident vehicle by distributing pieces of information on the vehicle or vehicle parts in a vehicle information system, comprises a numerical quantity estimating step of estimating a delivery numerical quantity of the same recycle part as a new part of the automobile by receiving result-of-delivery information on the new part thereof on a network, a part price calculating step of calculating a price of the same recycle part as the new part from the result-of-delivery information of the new part, and
a vehicle price value estimating step of estimating a price value of the disused/accident vehicle from the result-of-delivery information of the new part and from the price of the same recycle part as the new part.

## Description

### Technical Field

The present invention relates to a method of and system for estimating a price value of a disused/accident car that is developed on a network.

### Background Arts

Generally, a work of deassembling a disused car and an accident car impossible of being repaired needs paying to a deassembly company and so on a procedure proxy fee for deleting the car registration, a disused car processing fee and a transporting fee.

Over the recent years, however, used parts and rebuilt parts have been reexamined in terms of a merit of recycle and gained high demands. Note that the used parts are re-usable parts inspected and cleaned. Further, the rebuilt parts are the used parts repaired and re-coated to have substantially the same qualities as those of the new parts.

In any case, the disused/accident car out which a large quantity of parts can be taken, essentially has an economical value and deserves a proper dealing price. As a matter of fact, the deassembly company took back whatever vehicle by paying a price about 20 years ago. Nowadays, however, the present situation is that the processing costs are required as described above. Consequently, there arises a social phenomenon as an environmental problem in which the vehicles are junked on the shores of a river and in the mountains.

Under such circumstances, it is feasible to precisely grasp existences of the disused/accident cars coming out in localities and collecting these cars and to, if possible of effective utilization, properly evaluate a price value of the disused car or the like, and consequently there is a possibility of mending such a present situation that the cost for processing the vehicle must be collected.

An evaluation of the disused car, however, largely differs depending on its car type, year mode I, degree of damage and further rareness. Further, there are a variety of elements to be considered for judging the price value of the disused car or the line such as requiring a replacement of an inner part depending on how much the part is worn out even when the used part is rebuilt into a new piece of part.

Accordingly, for example, the value of the vehicle can not be properly estimated simply by sharing the information on the disused car or the like coming out on the network. Hence, it is impossible to purchase it at a proper price, and it follows that there is eventually no alternative but to take the conventional processing method.

This gives a demerit to the user and might also lead to a situation undesirable to the side utilizing the disused car etc. Namely, this leads to an unstable supply of the used parts if viewed from the side repairing and utilizing the used parts, and consequently prices of the used parts become unstable. Further, this might be a cause of making it difficult for an indemnity insurance company to offer a cheaper insurance plan that takes a position of desiring to decrease an insurance cost by positively utilizing the used parts.

It is a primary object of the present invention, which was devised in view of the items described above, to provide a method and a system for estimating a price value of a disused/accident vehicle, which are capable of stably collecting the disused/accident vehicles, grasping a stock of used parts, establishing market prices of the parts and effectively utilizing the parts by properly evaluating a price value of the disused/accident vehicle coming out in each locality.

It is another object of the present invention to provide a method and a system capable of predicting demands for the used parts and rebuilt parts.

### Disclosure of the Invention

According to a first invention, a method of determining a price of a disused/accident vehicle by distributing pieces of information on the vehicle or vehicle parts comprises the following steps (1) (3).

The step (1) is a step (numerical quantity estimating step) of estimating a delivery numerical quantity of the same recycle part as a new part of the automobile by receiving result-of-delivery information on the new part thereof on a network. In this step, the information given from an automobile parts maker is a main information source.

The step (2) is a step (part price calculating step) of calculating a price of the same recycle part as the new part from the result-of-delivery information of the new part. In this step, it is predicted that a part with a result of a larger quantity of delivery has a larger prospective demand. Accordingly, it is feasible to specify parts of which a considerable numerical quantity is required to be ensured even though expensive to some extent.

The step (3) is a step (vehicle price value estimating step) of estimating a price value of the disused/accident vehicle from the result-of-delivery information of the new part and from the price of the same recycle part as the new part. In this step, a final value of the vehicle is determined.

Further, according to a second invention, a method of determining a price of a disused/accident vehicle by distributing pieces of information on the vehicle or vehicle parts, comprises the following steps (4) (6).

The step (4) is a step (numerical quantity estimating step) of estimating a delivery numerical quantity of the same recycle part as a new part of the automobile by receiving result-of-delivery information on the new part thereof and result-of-delivery information on a recycle part of the automobile on a network, and calculating a delivery ratio of the new part to the recycle part. Herein if a rate of the recycle part is higher than those of other parts, it may be considered that this part has a high utilizing rate of the recycle part, and it can be therefore be understood that a considerable numerical quantity thereof is required to be ensured.

The step (5) is a step (part price calculating step) of calculating a price of the same recycle part as the new part from the result-of-delivery information of the new part.

The step (6) is a step (vehicle price value estimating step) of estimating a price value of the disused/accident vehicle from the result-of-delivery information of the new part and from the price of the same recycle part as the new part.

Moreover, according to a third invention, a method of determining a price of a disused/accident vehicle by distributing pieces of information on the vehicle or vehicle parts, comprises the following steps (7) (9).

The step (7) is a step (numerical quantity estimating step) of estimating a delivery numerical quantity of the same recycle part as a new part of the automobile by receiving result-of-delivery information on the new part thereof on a network.

The step (8) is a step (part price calculating step) of calculating a price of the same recycle part as the new part from the result-of-delivery information of the new part and from condition-of-part evaluating information developed on the network. The condition-of-part evaluating information is information for judging how much the part concerned is approximate to a new part, and a price of a comparatively new used part is, as a matter of course, set high.

The step (9) is a step (vehicle price value estimating step) of estimating a price value of the disused/accident vehicle from the result-of-delivery information of the new part and from the price of the same recycle part as the new part.

According to a fourth invention, a system for determining a price of a disused/accident vehicle by distributing pieces of information on the vehicle or vehicle parts, comprises a main server, and an automobile new part utilizing state supplier sided terminal connected to said main server on a network. The main server includes a first storing means for storing result-of-delivery information on a new part that is transmitted from said automobile new part utilizing state supplier sided terminal, a second storing means for storing vehicle detailed data containing a parts list corresponding to each type of vehicle, a numerical quantity estimating means for estimating a delivery numerical quantity of the same recycle part as the new part on the basis of the result-of-delivery information on the new part, a part price calculating means for calculating a price of the same recycle part as the new part from the result-of-delivery information of the new part, and a vehicle price value estimating means for estimating a price value of the disused/accident vehicle from the result-of-delivery information of the new part and from the price of the same recycle part as the new part.

Note that a vehicle information distribution system may be configured on the network on the occasion of actualizing the present invention. The vehicle information distribution system functions to exchange pieces of information on the disused/accident cars coming out via the Internet, wherein what can be exemplified as subscribers may be an automobile maintenance shop, a car deassembly company, an industrial wastes treatment company, a shredder company, a used or new parts dealer, an indemnity insurance company, an automobile lease company, a rent-a-car shop, an automobile company, a parts maker and an car owner.

Further, general items of information such as a car type a year mode etc on the vehicle that should be evaluated may be incorporated into beforehand into the vehicle information system.

According to the present invention, it is possible to estimate the delivery numerical quantity of the same recycle part as the new part of the automobile by receiving the result-of-delivery information on the new part thereof on the network, estimate the price of the part and properly evaluate the price value of the disused/accident car. Hence, the vehicles can be stably collected.

Moreover, a prediction of demands for the used parts and grasp of the stock can be facilitated, and the used parts can be utilized as planned.

### Brief Description of the Drawings

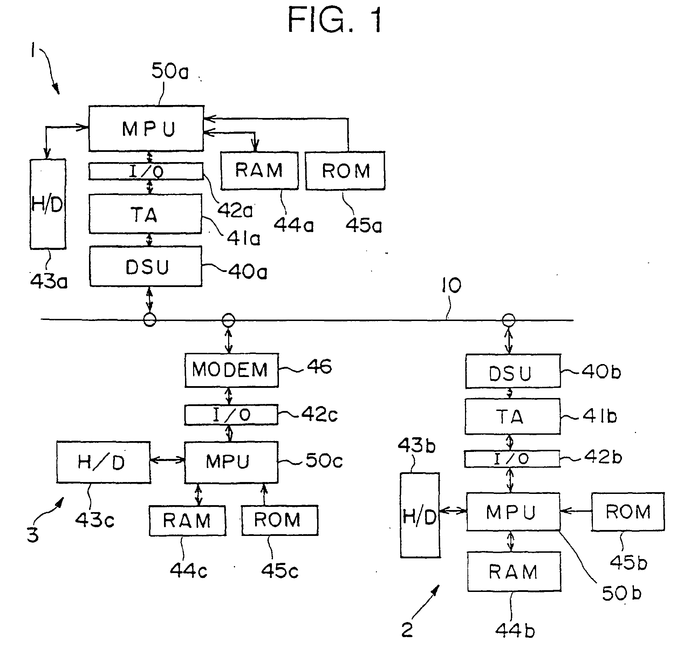

FIG. 1 is a block diagram showing pieces of hardware used for a system for estimating a price value of a disused/accident car in one embodiment of the present invention;
FIG. 2 is an explanatory flowchart showing a control process in the disused/accident car price value estimating system in the embodiment;
FIG. 3 is a diagram showing an example of a data file transmitted from a client side in the embodiment;
FIG. 4 is a diagram showing an example of a data file shared with a server and respective in the embodiment;
FIG. 5 is a diagram showing a recycle parts file in the embodiment;
FIG. 6 is a diagram showing a disused/accident car price value assessment file in the embodiment; and
FIG. 7 is a diagram showing an example of the disused/accident car price value assessment file in the embodiment, wherein demountable (re-usable) parts are entered.

### Best Mode for Carrying out the Invention

A method of estimating a price value of a disused/accident car and an estimation system will be described by way of one embodiment of the present invention.

The system according to the present invention is configured by a network server and client terminals connected via lines to this network server. The description at first touches on hardware thereof.

A main server 1, a client terminal 2 and a general consumer terminal 3 are connected onto a public (telephone line) or local area network 10. Parties such as an automobile parts maker (a new parts utilizing state supplier), a repair shop and a deassembling company install the client terminals 2. Further, the main servers 1 are installed in, for example, an indemnity insurance company, an automobile maker, a parts distribution company and so on. Note that the terminal installed in the automobile maker etc may function as the client terminal 2, or the terminal installed in the automobile parts maker (the new parts utilizing state supplier) etc may function as the main server 1. Note that the network 10 may involve an exemplification of the Internet as a general-purposed TCP/IP (Transmission Control Protocol/Internet Protocol) based data transmission system.

A terminal adapter (TA) 41a is connected via a digital service unit (DSU) 40a to the network 10 in the main server 1.

Then, an input/output (I/O) port 42a is connected to a micro processing unit (MPU) 50a. The micro processing unit (MPU) 50a is connected to a random access memory (RAM) 44a, a read-only memory (ROM) 45a and a hard disk 43a, and has a function as a server. Note that the micro processing unit (MPU) 50a corresponds to a numerical quantity estimating means, a part price calculating means and a vehicle price value estimating means, and the hard disk 43a corresponds to a first storing means and a second storing means.

Further, the client terminal 2 is connected to onto the network 10, and a terminal adapter (TA) 41b is connected via a digital service unit (DSU) 40b to the network 10. The I/O port 42b is connected to the micro processing unit (MPU) 50b. The micro processing unit (MPU) 50b is connected to a random access memory (RAM) 44b, a read-only memory (ROM) 45b and a hard disk 43b, and has a function as an Internet terminal via ISDN(Integrated Services Digital Network).

Further, the general consumer terminal 3 is connected via an analog line onto the network 10, and an input/output (I/O) port 42c is connected via a modem 46 to the network 10. The I/O port 42c is connected to a micro processing unit (MPU) 50c. Further, the micro processing unit (MPU) 50c is connected to a random access memory (RAM) 44c, a read-only memory (ROM) 45c and a hard disk 43c and has a function as an Internet terminal via an analog line.

Thus, each of the communication devices has substantially the same hardware architecture, however, the following processes are executed for the inputted information on the main server 1.

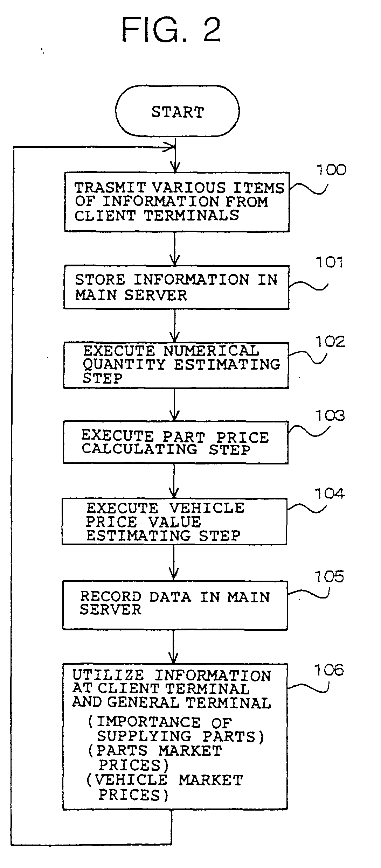

To be specific, the automobile parts maker etc sends result-of-delivery information of the new parts of the automobile onto the network 10, and the main server 1 receives the result-of-delivery information and estimates a delivery numerical quantity of the same recycle part as the new part concerned (a numerical quantity estimating step). This is given in a flowchart shown in FIG. 2, wherein various categories of information are transmitted from the client terminals in a process 100.

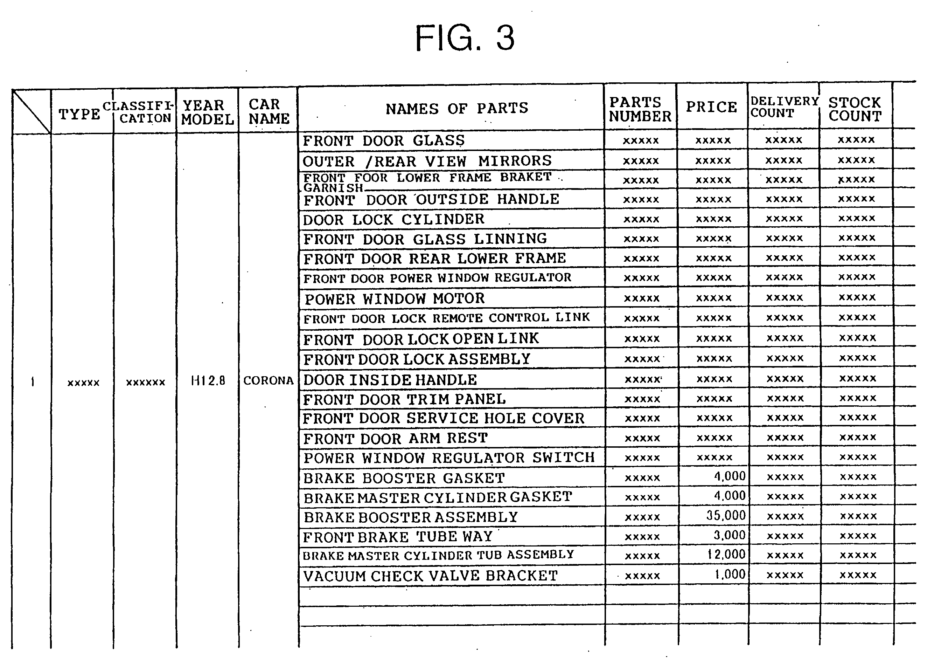

The various categories of information are specifically, as shown in FIG. 3, a type, a classification, a year model and a name of the vehicle, and, in addition, a name of the part, a part number, a price, a delivery count and a stock count. These parts are not limited to genuine parts and include non-genuine parts. Then, pieces of data thereof are stored on a hard disk (database) in the main server in the process 101.

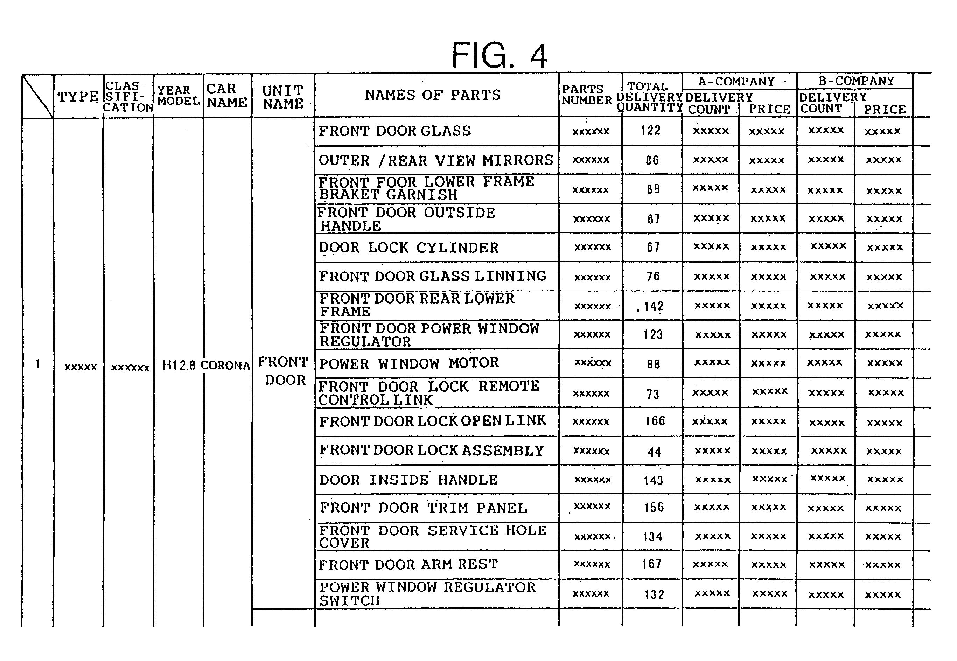

FIG. 4 shows the database stored with the above data and serving as a file shared with all the terminals (some of which can be limited as the necessity may arise). Contents shown in FIG. 4 are displayed on a display (unillustrated) of the terminal), and the delivery count of the parts and the data about every maker can be browsed. Accordingly, the respective items of data are accumulated, whereby a car with an accident liable to happen and even the parts easy to break down as a result of the accident, can be grasped.

Hence, the indemnity insurance company can set a proper insurance fee with respect to every maker and car type. Delivery parts data are collected on a parts number basis, however, a demand prediction (a process 102) is made on an arbitrary assemble basis of the assemblies distributed on the recycle parts market.

For instance, focusing on an outside handle of the door in FIG. 4, the delivery parts data are collected on a [front door outside handle] basis and a [rear door outside handle] basis, however, the demand prediction is made with respect to the [front door] and the [rear door]. Demands for at least 67 pieces of doors (the recycle parts) can be predicted from FIG. 4.

Note that the demand prediction may be done by collecting the delivery parts data of the recycle parts and taking into account delivery ratios of the new parts and the used parts according to the maker and the car type. Namely, if the delivery ratio of the used parts is high, it follows that a much higher demand can be anticipated.

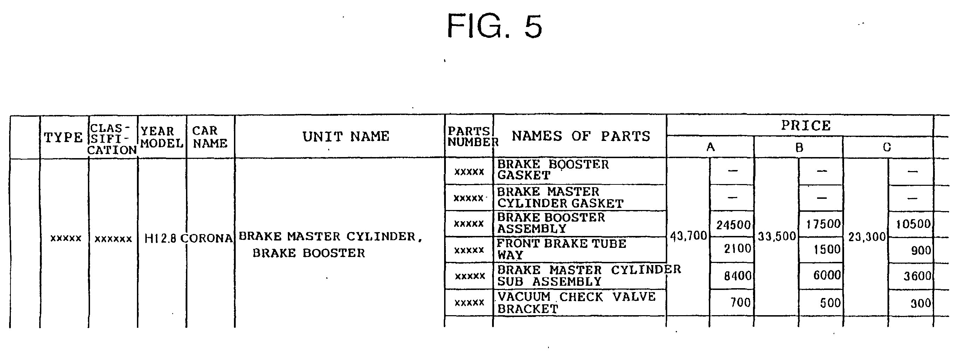

Next, a recycle parts file shown in FIG. 5 is created from the shared data (FIG. 4) described above, and prices of the respective recycle parts are displayed (a process 103).

All the recycle parts were once used and are all therefore different in their conditions. Hence, a precise evaluation of the recycle part is required.

Then, the recycle parts are classified into three ranks A, B and C and further each weighted corresponding a part delivery quantity thereof. That is, the part having a larger delivery quantity is given a price that is 70% of the new part price at the rank A with a short period of use, 50% at the rank B and 30% at the rank C.

Moreover, the part having a small delivery quantity is given a price that is 40% of the new part price at the rank A, 30% at the rank B and 20% at the rank C.

Note that assemble-basis prices and constructive parts prices are prepared with respect to the parts that are traded on the assemble basis. This will be explained by exemplifying prices of a brake master cylinder and a brake booster (a rebuilt part). Note that neither brake booster gasket nor a brake master cylinder gasket can use the recycle parts, and therefore prices thereof are calculated based on the price data of the delivery parts file (FIG. 3).

When selecting the A-rank part, the calculation is 35,700 (recycle part price) + 8, 000 (new part price) = 43, 700 yen. Similarly when selecting the B-rank part, the calculation is 25,500 (recycle part price) + 8,000 (new part price) = 33, 5000 yen. Further, when selecting the C-rank part, the calculation is 15,300 (recycle part price) + 8,000 (new part price) = 23,300 yen (FIG. 5).

Next, a vehicle price value estimating step shown in process 104 will be explained.

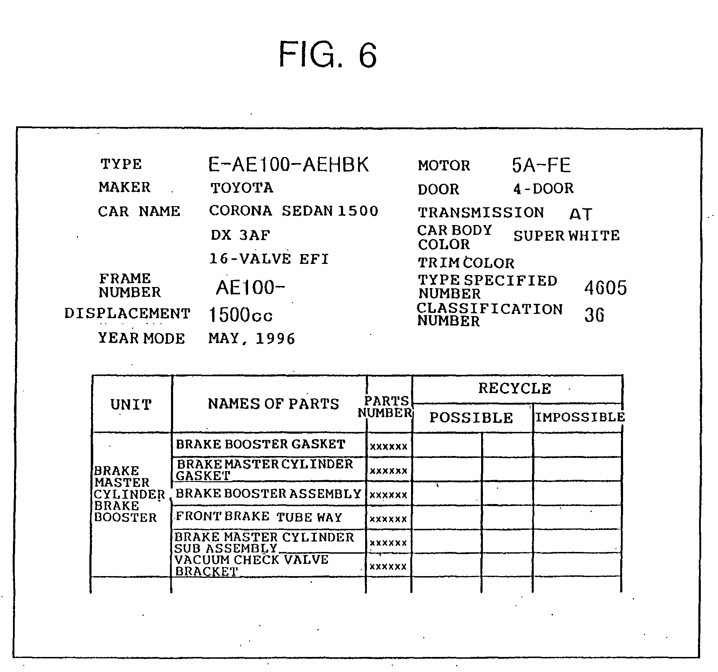

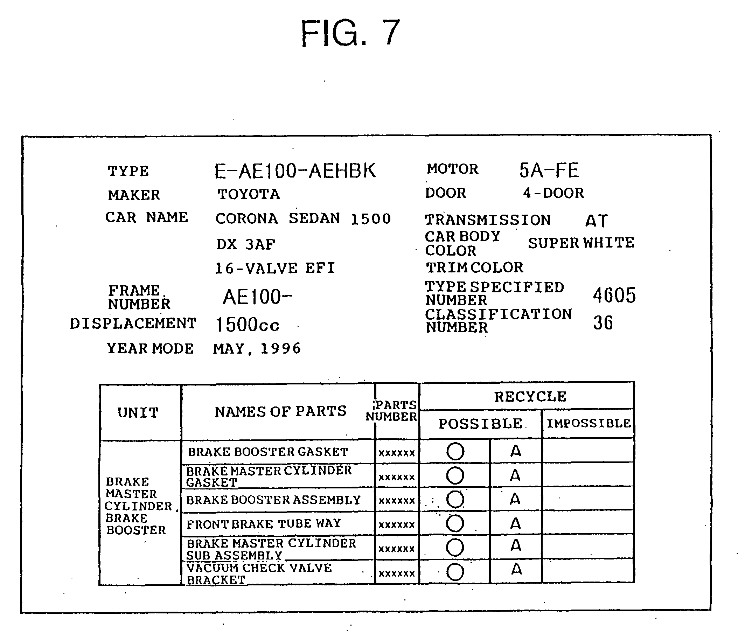

In this process, the disused/accident car is inspected, and its demountable parts (component units) are written to a disused/accident car assessment file (FIG. 6) (a written file; FIG. 7). The disused/accident car assessment file (FIG. 6) is obtained by executing an output conversion from the recycle parts file sown in FIG. 5.

Subsequently, the disused/accident assessment file (FIG. 6) and the recycle parts file (FIG. 5) are edited, whereby a price value of the disused/accident car is estimated.

Only four sets of [brake master cylinders, brake boosters] can be recycled in the example shown in FIG. 7. A total amount of money of these parts (A-rank) is calculated based on the recycle parts file (FIG. 5) and comes to 174,800 yen (43,700 x 4). Therefore, the price value of the vehicle is 174,800 yen. This record of data is stored in the main server in process 105 and accessible from whichever terminal in process 106.

The present invention is not limited to the contents in the embodiment discussed above and can be modified in many forms by those skilled in the art without departing from the scope of the gist according to the claims.

## Claims

1. A disused/accident vehicle price value estimating method of determining a price of a disused/accident vehicle by distributing pieces of information on the vehicle or vehicle parts in a vehicle information system, said method comprising:
a numerical quantity estimating step of estimating a delivery numerical quantity of the same recycle part as a new part of the automobile by receiving result-of-delivery information on the new part thereof on a network;
a part price calculating step of calculating a price of the same recycle part as the new part from the result-of-delivery information of the new part; and
a vehicle price value estimating step of estimating a price value of the disused/accident vehicle from the result-of-delivery information of the new part and from the price of the same recycle part as the new part.

2. A disused/accident vehicle price value estimating method of determining a price of a disused/accident vehicle by distributing pieces of information on the vehicle or vehicle parts, said method comprising:
a numerical quantity estimating step of estimating a delivery numerical quantity of the same recycle part as a new part of the automobile by receiving result-of-delivery information on the new part thereof and result-of-delivery information on a recycle part of the automobile on a network, and calculating a delivery ratio of the new part to the recycle part;
a part price calculating step of calculating a price of the same recycle part as the new part from the result-of-delivery information of the new part; and
a vehicle price value estimating step of estimating a price value of the disused/accident vehicle from the result-of-delivery information of the new part and from the price of the same recycle part as the new part.

3. A disused/accident vehicle price value estimating method of determining a price of a disused/accident vehicle by distributing pieces of information on the vehicle or vehicle parts, said method comprising:
a numerical quantity estimating step of estimating a delivery numerical quantity of the same recycle part as a new part of the automobile by receiving result-of-delivery information on the new part thereof on a network;
a part price calculating step of calculating a price of the same recycle part as the new part from the result-of-delivery information of the new part and from condition-of-part evaluating information developed on the network; and
a vehicle price value estimating step of estimating a price value of the disused/accident vehicle from the result-of-delivery information of the new part and from the price of the same recycle part as the new part.

4. A disused/accident vehicle price value estimating system for determining a price of a disused/accident vehicle by distributing pieces of information on the vehicle or vehicle parts, said system comprising:
a main server; and
an automobile new part utilizing state supplier sided terminal connected to said main server on a network,
said main server including:
first storing means for storing result-of-delivery information on a new part that is transmitted from said automobile new part utilizing state supplier sided terminal;
second storing means for storing vehicle detailed data containing a parts list corresponding to each type of vehicle;
numerical quantity estimating means for estimating a delivery numerical quantity of the same recycle part as the new part on the basis of the result-of-delivery information on the new part;
part price calculating means for calculating a price of the same recycle part as the new part from the result-of-delivery information of the new part; and
vehicle price value estimating means for estimating a price value of the disused/accident vehicle from the result-of-delivery information of the new part and from the price of the same recycle part as the new part.
